# EUROPEAN PATENT SPECIFICATION

(11) **EP 4 335 675 B1**
(45) Date of publication and mention of the grant of the patent: **01.01.2025**
(21) Application number: 23220868.6
(22) Date of filing: 10.11.2020
(51) Int. Cl.: B60J 7/06

(54) **A SUPPORT STRUCTURE FOR A TARPAULIN FOR VEHICLES, TRAILERS, SEMI-TRAILERS AND CONTAINERS**
EINE UNTERSTÜTZUNGSSTRUKTUR FÜR EINE PLANE FÜR FAHRZEUGE, ANHÄNGER UND BEHÄLTER
UNE STRUCTURE DE SUPPORT POUR UNE BÂCHE POUR VÉHICULES, REMORQUES, ET CONTENEURS

(30) Priority: 11.11.2019 IT 201900020778
(43) Date of publication of application: 13.03.2024
(62) Divisional of application: 20206574.4
(73) Proprietor: Cramaro Holding S.p.A., 37044 Cologna Veneta (Verona) (IT)
(72) Inventor: BINCO, Davide, 37060 SORGA' (IT)
(74) Representative: De Anna, Pier Luigi

(56) References cited:
- EP-A2- 1 122 108
- DE-U1- 8 709 759
- ES-A1- 2 562 346
- FR-A1- 2 742 105
- KR-B1- 100 843 563

## Description

The present invention relates to a support structure according to the preamble of independent claims 1 or 4.

A support structure of this kind is described in EP 1 122 108 A2. A further support structure is disclosed, for example, in EP 2 075 149 A1. In this support structure, the two arms are hinged to a bracket which provides fastening means for the tarpaulin.

A configuration of this kind is sometimes inefficient from the point of view of correctly folding the tarpaulin, when the carrier ribs are brought together to allow the loading compartment to be opened.

One aim of the present invention is therefore that of providing a solution for overcoming the disadvantages of the prior art.

In view of this aim, the object of the invention is a support structure having the features of claims 1 or 4.

The shape of the head allows the tarpaulin to rotate and improves the folding of the tarpaulin, by supporting it in a more natural way and reducing the mechanical stresses caused by the folds that are formed in the case of non-rounded supports.

In particular, the cross-sectional profile of each head may be at least partially circular and coaxial with the hinge axis between the heads.

According to one embodiment, each of said heads comprises a plurality of separate segments, said heads being interdigitated to each other.

In particular, said heads may be provided with respective cylindrical guides coupled to each other by a rotation pin.

According to one specific embodiment, the structure also comprises a support mounted to the rotation pin, said support comprising fastening means for fastening the tarpaulin thereto.

Further features and advantages of the structure according to the invention will become clearer from the following detailed description of an embodiment of the invention, made in reference to the accompanying drawings, provided purely for illustrative and nonlimiting purposes, in which:
- Fig. 1 shows a support structure for a tarpaulin for vehicles and containers;
- Fig. 2 and 3 are, respectively, a perspective view and an exploded view of a pair of adjacent sliders of the support structure from Fig. 1.

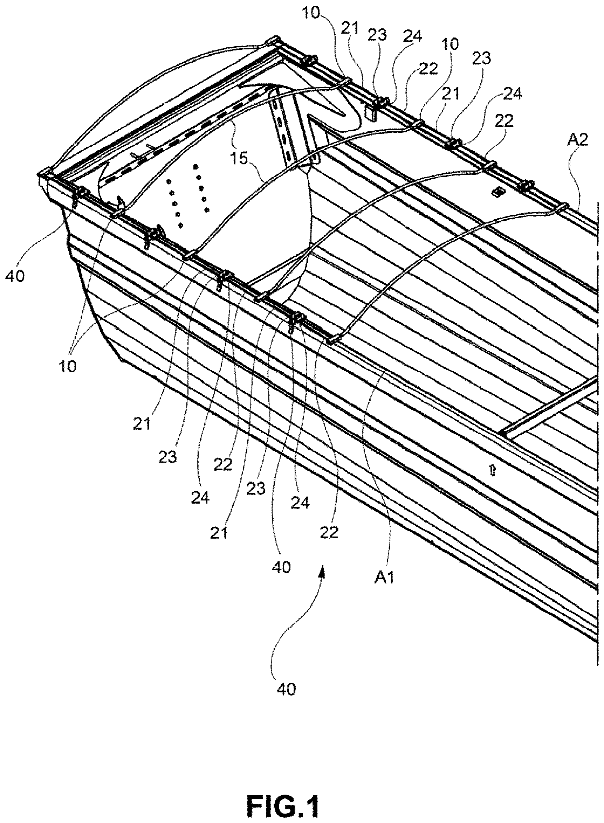

With reference to Fig. 1, a support structure for a tarpaulin is shown, which support structure is installed on a loading compartment of a vehicle, trailer or container, indicated as a whole by reference sign A. This support structure allows the tarpaulin to be closed (loading compartment covered by the tarpaulin) or open (tarpaulin folded away at one end of the loading compartment). For this purpose, an actuation system (not shown) associated with the support structure is provided. This system is a conventional system and is not the subject of the present invention.

The support structure comprises two series of sliders 10 arranged for sliding along respective side supports or guides A1 and A2 of the loading compartment A. Sliders 10 of this kind may conventionally have a lower surface which is made of anti-friction material or provided with wheels.

The support structure also comprises a plurality of carrier ribs 15 configured to support a tarpaulin (not shown). Each carrier rib 15 connects two sliders 10 of the two series of sliders, respectively, to each other.

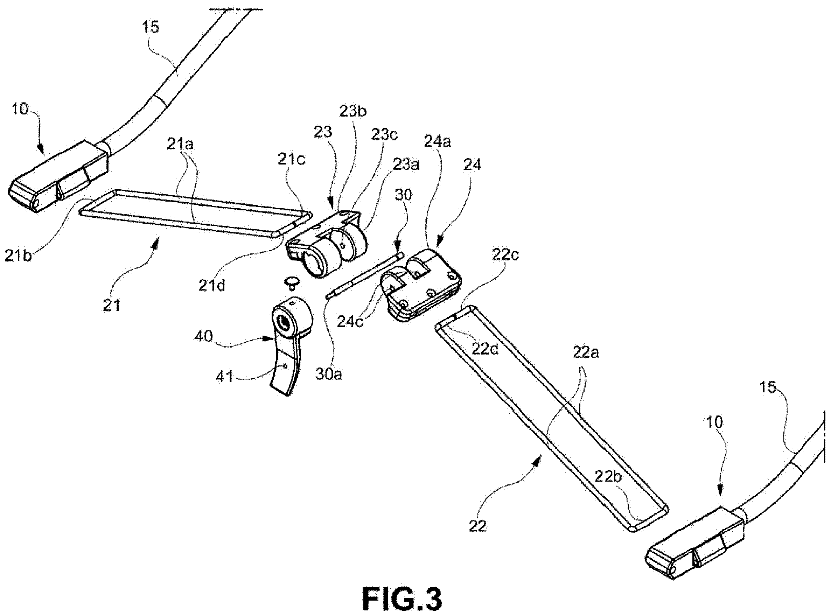

Adjacent sliders 10 of each series are connected to each other by means of two arms 21, 22 respectively hinged to the adjacent sliders 10. In the example shown, each of the arms 21 and 22 is formed from a folded rod comprising a pair of longitudinal portions 21a, 22a and transverse portions 21b, 22b and 21c-12d, 22c-22d (see in particular Fig. 3).

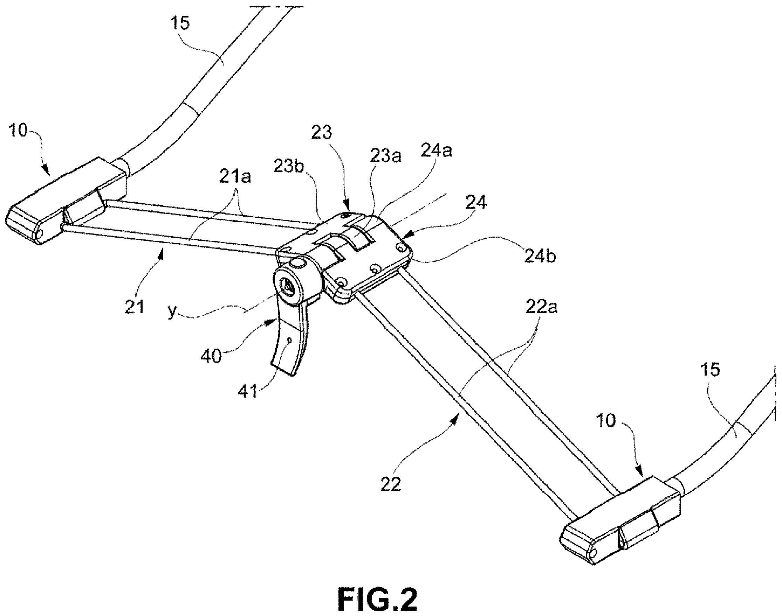

As may be seen more clearly in Fig. 2 and 3, the arms 21 and 22 comprise respective heads 23, 24 hinged to each other. Each head 23, 24 has a rounded cross-sectional profile at the hinge. In the example shown, each head 23, 24 comprises a hinge part 23a, 24a which has a rounded profile, and a fastening part 23b, 24b which is clamped, by means of screws, around the transverse portions 21c-21d, 22c- 22d of the relevant rod element 21, 22. However, the invention is not limited to this specific construction, since different shapes are conceivable for the arms, for the relative heads, and for the fastening means which allow the heads to be secured to the arms. According to one alternative embodiment (not shown), each arm and the relevant head could be made as a single piece.

The cross-sectional profile of each head 23, 24 at the hinge (parts 23a and 24a) is preferably at least partially circular and coaxial with the hinge axis y between the heads 23, 24.

In the example shown, each of the heads 23, 24 at the hinge (parts 23a and 24a) comprises a plurality of separate segments in the direction of the hinge axis y, so that the heads 23 and 24 are interdigitated to each other.

In the example shown, the heads 23, 24, or rather the respective hinge parts 23a, 24a, are provided with respective cylindrical guides 23c, 24c coupled to each other by a rotation pin 30.

A support 40 is provided mounted to the rotation pin 30, which support 40 comprises fastening means for fastening the tarpaulin thereto. In the example shown, these fastening means are formed as a hole 41 passing through the body of the support 40. However, the invention is not limited to this embodiment. In the example shown, the support 40 is constrained to an outer end 30a of the rotation pin 30. The support 40 may be configured so as to be able to rotate with complete freedom with respect to the pin 30 or be constrained to the pin 30 in a stable manner by means of interlocking or in a semi-stable manner with a predetermined limit of rotation. The shape of the support 40 is due to the need to support and/or carry the tarpaulin outside the restraints of the mechanics: ribs, cables, etc. Supports of this kind are accessories to the mechanism and do not constitute an integral part thereof for the purpose of operating.

## Claims

1. A support structure for a tarpaulin for vehicles, trailers, semi-trailers and containers, comprising two series of sliders (10) configured to be arranged for sliding along respective side supports (A1, A2) of a loading compartment (A), a plurality of carrier ribs (15) configured to support a tarpaulin, each carrier rib (15) connecting two sliders (10) of the two series, respectively, to each other,
wherein adjacent sliders (10) of each series are connected to each other by means of two arms (21, 22) respectively hinged to the adjacent sliders (10),
wherein said two arms (21, 22) are hinged to each other, and
wherein each of said two arms is formed from a folded rod and comprises a pair of longitudinal portions (21a, 22a) and transverse portions (21b, 21c-21d, 22b, 22c-22d),
said structure being **characterized in that**
said sliders (10) have a lower surface which is made of anti-friction material, and
said two arms (21, 22) comprise respective heads (23, 24) hinged to each other, each head (23, 24) having a rounded cross-sectional profile at the hinge,
wherein each of said heads comprises a fastening part (23a, 23b) clamped around at least one transverse portion (21c-21d, 22c-22d) of the relevant arm (21, 22), wherein said heads are provided with respective cylindrical guides (23c, 24c) coupled to each other by a rotation pin (30), and
wherein said structure further comprises a support (40) mounted to the rotation pin (30), said support comprising fastening means (41) for fastening the tarpaulin thereto.

2. The structure according to claim 1, wherein the cross-sectional profile of each head (23, 24) at the hinge is at least partially circular and coaxial with a hinge axis (y) between the heads (23, 24).

3. The structure according to claim 1 or 2, wherein each of said heads (23, 24) comprises a plurality of separate segments along the direction of the hinge axis (y), said heads being interdigitated to each other.

4. A support structure for a tarpaulin for vehicles, trailers, semi-trailers and containers, comprising two series of sliders (10) configured to be arranged for sliding along respective side supports (A1, A2) of a loading compartment (A), a plurality of carrier ribs (15) configured to support a tarpaulin, each carrier rib (15) connecting two sliders (10) of the two series, respectively, to each other,
wherein adjacent sliders (10) of each series are connected to each other by means of two arms (21, 22) respectively hinged to the adjacent sliders (10),
wherein said two arms (21, 22) are hinged to each other, and
wherein each of said two arms is formed from a folded rod and comprises a pair of longitudinal portions (21a, 22a) and transverse portions (21b, 21c-21d, 22b, 22c-22d),
said structure being **characterized in that**
said sliders (10) have a lower surface which is provided with wheels, and
said two arms (21, 22) comprise respective heads (23, 24) hinged to each other, each head (23, 24) having a rounded cross-sectional profile at the hinge,
wherein each of said heads comprises a fastening part (23a, 23b) clamped around at least one transverse portion (21c-21d, 22c-22d) of the relevant arm (21, 22), wherein said heads are provided with respective cylindrical guides (23c, 24c) coupled to each other by a rotation pin (30), and
wherein said structure further comprises a support (40) mounted to the rotation pin (30), said support comprising fastening means (41) for fastening the tarpaulin thereto.

5. The structure according to claim 4, wherein the cross-sectional profile of each head (23, 24) at the hinge is at least partially circular and coaxial with a hinge axis (y) between the heads (23, 24).

6. The structure according to claim 4 or 5, wherein each of said heads (23, 24) comprises a plurality of separate segments along the direction of the hinge axis (y), said heads being interdigitated to each other.

## Patentansprüche

1. Tragkonstruktion für eine Plane für Fahrzeuge, Anhänger, Sattelauflieger und Container, umfassend zwei Reihen von Schiebern (10), die dazu ausgestaltet sind, zum Gleiten entlang jeweiligen Seitenstützen (A1, A2) eines Laderaums (A) angeordnet zu werden, eine Vielzahl von Tragstreben (15), die dazu ausgestaltet sind, eine Plane zu tragen, wobei jede Tragstrebe (15) jeweils zwei Schieber (10) der zwei Reihen miteinander verbindet, wobei benachbarte Schieber (10) jeder Reihe mithilfe von zwei Armen (21, 22) miteinander verbunden sind, die jeweils an die benachbarten Schieber (10) angelenkt sind, wobei die zwei Arme (21, 22) gelenkig miteinander verbunden sind, und wobei jeder der zwei Arme aus einer gefalteten Stange ausgebildet ist und ein Paar von Längsabschnitten (21a, 22a) und Querabschnitten (21b, 21c-21d, 22b, 22c-22d) umfasst, wobei die Konstruktion **dadurch gekennzeichnet ist, dass**
die genannten Schieber (10) haben eine untere Fläche, die aus einem reibungsarmen Material besteht, und
die zwei Arme (21, 22)jeweilige Kopfstücke (23, 24) umfassen, die gelenkig miteinander verbunden sind, wobei jedes Kopfstück (23, 24) an dem Gelenk ein abgerundetes Querschnittsprofil aufweist,
wobei jedes der Kopfstücke ein Befestigungsteil (23a, 23b) umfasst, das um mindestens einen Querabschnitt (21c-21d, 22c-22d) des entsprechenden Arms (21, 22) geklemmt ist,
wobei die Kopfstücke mit jeweiligen zylindrischen Führungen (23c, 24c) versehen sind, die durch einen Drehbolzen (30) miteinander verbunden sind, und
wobei die Konstruktion ferner eine Stütze (40) umfasst, die an den Drehbolzen (30) montiert ist, wobei die Stütze Befestigungsmittel (41) zum Befestigen der Plane daran umfasst.

2. Konstruktion nach Anspruch 1, wobei das Querschnittsprofil von jedem Kopfstück (23, 24) an dem Gelenk zumindest teilweise kreisförmig und koaxial zu einer Gelenkachse (y) zwischen den Kopfstücken (23, 24) ist.

3. Konstruktion nach Anspruch 1 oder 2, wobei jedes der Kopfstücke (23, 24) eine Vielzahl von separaten Segmenten entlang der Richtung der Gelenkachse (y) umfasst, wobei die Kopfstücke ineinandergreifen.

4. Tragkonstruktion für eine Plane für Fahrzeuge, Anhänger, Sattelauflieger und Container, umfassend zwei Reihen von Schiebern (10), die dazu ausgestaltet sind, zum Gleiten entlang jeweiligen Seitenstützen (A1, A2) eines Laderaums (A) angeordnet zu werden, eine Vielzahl von Tragstreben (15), die dazu ausgestaltet sind, eine Plane zu tragen, wobei jede Tragstrebe (15) jeweils zwei Schieber (10) der zwei Reihen miteinander verbindet, wobei benachbarte Schieber (10) jeder Reihe mithilfe von zwei Armen (21, 22) miteinander verbunden sind, die jeweils an die benachbarten Schieber (10) angelenkt sind, wobei die zwei Arme (21, 22) gelenkig miteinander verbunden sind, und wobei jeder der zwei Arme aus einer gefalteten Stange ausgebildet ist und ein Paar von Längsabschnitten (21a, 22a) und Querabschnitten (21b, 21c-21d, 22b, 22c-22d) umfasst, wobei die Konstruktion **dadurch gekennzeichnet ist, dass**
die genannten Schieber (10) weisen eine untere Fläche auf, die mit Rädern versehen ist, und die zwei Arme (21, 22) jeweilige Kopfstücke (23, 24) umfassen, die gelenkig miteinander verbunden sind,
wobei jedes Kopfstück (23, 24) an dem Gelenk ein abgerundetes Querschnittsprofil aufweist, wobei jedes der Kopfstücke ein Befestigungsteil (23a, 23b) umfasst, das um mindestens einen Querabschnitt (21c-21d, 22c-22d) des entsprechenden Arms (21, 22) geklemmt ist,
wobei die Kopfstücke mit jeweiligen zylindrischen Führungen (23c, 24c) versehen sind, die durch einen Drehbolzen (30) miteinander verbunden sind, und
wobei die Konstruktion ferner eine Stütze (40) umfasst, die an den Drehbolzen (30) montiert ist, wobei die Stütze Befestigungsmittel (41) zum Befestigen der Plane daran umfasst.

5. Konstruktion nach Anspruch 4, wobei das Querschnittsprofil von jedem Kopfstück (23, 24) an dem Gelenk zumindest teilweise kreisförmig und koaxial zu einer Gelenkachse (y) zwischen den Kopfstücken (23, 24) ist.

6. Konstruktion nach Anspruch 4 oder 5, wobei jedes der Kopfstücke (23, 24) eine Vielzahl von separaten Segmenten entlang der Richtung der Gelenkachse (y) umfasst, wobei die Kopfstücke ineinandergreifen.

## Revendications

1. Structure support pour une bâche pour véhicules, remorques, semi-remorques et conteneurs, comprenant deux séries de coulisseaux (10) conçus pour être agencés afin de coulisser le long de supports latéraux respectifs (A1, A2) d'un compartiment de chargement (A), une pluralité de nervures support (15) conçues pour supporter une bâche, chaque nervure support (15) reliant deux coulisseaux (10) des deux séries, respectivement, l'un à l'autre, des coulisseaux adjacents (10) de chaque série étant reliés l'un à l'autre au moyen de deux bras (21, 22) respectivement articulés sur les coulisseaux adjacents (10), lesdits deux bras (21, 22) étant articulés l'un à l'autre et chacun desdits deux bras étant formé à partir d'une tige pliée et comprenant une paire de parties longitudinales (21a, 22a) et des parties transversales (21b, 21c-21d, 22b, 22c-22d), ladite structure étant **caractérisée en ce que**
lesdits coulisseaux (10) ont une surface inférieure faite d'un matériau anti-friction, et
lesdits deux bras (21, 22) comprennent des têtes respectives (23, 24) articulées l'une à l'autre, chaque tête (23, 24) présentant un profil de section transversale arrondi au niveau de la charnière,
chacune desdites têtes comprenant une partie de fixation (23a, 23b) serrée autour d'au moins une partie transversale (21c-21d, 22c-22d) du bras pertinent (21, 22),
lesdites têtes étant pourvues de guides cylindriques respectifs (23c, 24c) accouplés l'un à l'autre par une broche de rotation (30) et
ladite structure comprenant en outre un support (40) monté sur la broche de rotation (30), ledit support comprenant des moyens de fixation (41) pour fixer la bâche à celui-ci.

2. Structure selon la revendication 1, le profil de section transversale de chaque tête (23, 24) au niveau de la charnière étant au moins partiellement circulaire et coaxial avec un axe de charnière (y) entre les têtes (23, 24).

3. Structure selon la revendication 1 ou 2, chacune desdites têtes (23, 24) comprenant une pluralité de segments séparés le long de la direction de l'axe de charnière (y), lesdites têtes étant entrecroisées les unes avec les autres.

4. Structure support pour une bâche pour véhicules, remorques, semi-remorques et conteneurs, comprenant deux séries de coulisseaux (10) conçus pour être agencés afin de coulisser le long de supports latéraux respectifs (A1, A2) d'un compartiment de chargement (A), une pluralité de nervures support (15) conçues pour supporter une bâche, chaque nervure support (15) reliant deux coulisseaux (10) des deux séries, respectivement, l'un à l'autre, des coulisseaux adjacents (10) de chaque série étant reliés l'un à l'autre au moyen de deux bras (21, 22) respectivement articulés sur les coulisseaux adjacents (10), lesdits deux bras (21, 22) étant articulés l'un à l'autre et chacun desdits deux bras étant formé à partir d'une tige pliée et comprenant une paire de parties longitudinales (21a, 22a) et des parties transversales (21b, 21c-21d, 22b, 22c-22d), ladite structure étant **caractérisée en ce que**
lesdites coulisseaux (10) ont une surface inférieure munie de roues, et
lesdits deux bras (21, 22) comprennent des têtes respectives (23, 24) articulées l'une à l'autre, chaque tête (23, 24) présentant un profil de section transversale arrondi au niveau de la charnière,
chacune desdites têtes comprenant une partie de fixation (23a, 23b) serrée autour d'au moins une partie transversale (21c-21d, 22c-22d) du bras pertinent (21, 22), lesdites têtes étant pourvues de guides cylindriques respectifs (23c, 24c) accouplés l'un à l'autre par une broche de rotation (30) et
ladite structure comprenant en outre un support (40) monté sur la broche de rotation (30), ledit support comprenant des moyens de fixation (41) pour fixer la bâche à celui-ci.

5. Structure selon la revendication 4, le profil de section transversale de chaque tête (23, 24) au niveau de la charnière étant au moins partiellement circulaire et coaxial avec un axe de charnière (y) entre les têtes (23, 24).

6. Structure selon la revendication 4 ou 5, chacune desdites têtes (23, 24) comprenant une pluralité de segments séparés le long de la direction de l'axe de charnière (y), lesdites têtes étant entrecroisées les unes avec les autres.
